# EUROPÄISCHE PATENTSCHRIFT

(11) **EP 1 812 883 B1**
(45) Veröffentlichungstag und Bekanntmachung des Hinweises auf die Patenterteilung: **14.10.2009**
(21) Anmeldenummer: 05811198.0
(22) Anmeldetag: 26.10.2005
(51) Int. Cl.: G06K 7/08, G06K 7/10

(54) **ERFASSUNGSVORRICHTUNG**
DETECTION DEVICE
DISPOSITIF DE DÉTECTION

(30) Priorität: 28.10.2004 DE 102004052396; 16.09.2005 DE 202005014644 U
(43) Veröffentlichungstag der Anmeldung: 01.08.2007
(73) Patentinhaber: VERMOP Salmon GmbH, 82205 Gilching (DE)
(72) Erfinder: SCHNEIDER, Lutz, 76316 Malsch (DE)
(74) Vertreter: HOFFMANN EITLE
(86) Internationale Anmeldenummer: PCT/DE2005/001925
(87) Internationale Veröffentlichungsnummer: WO 2006/045293

(56) Entgegenhaltungen:
- US-A1- 2002 109 637
- US-A1- 2003 107 522
- US-A1- 2004 164 864

## Beschreibung

Die Erfindung betrifft eine Erfassungsvorrichtung für Stückgüter, vorzugsweise Textilien und/oder textile Gegenstände, mit einer Antennenvorrichtung zur induktiven Einkopplung einer Betriebsspannung in eine elektronische Markierung gemäß dem Oberbegriff des Anspruchs 1.

Eine derartige Erfassungsvorrichtung für Reinigungsmops ist beispielsweise aus dem deutschen Gebrauchsmuster DE 200 16 620 U1 vorbekannt.

Der aus dieser Schrift vorbekannte Reinigungsmop ist auf der bei bestimmungsgemäßer Benutzung dem zu reinigenden Fußboden zugewandten Seite mit einem Reinigungsflor versehen und weist an der gegenüberliegenden Seite im Seitenendbereich jeweils eine offene Aufnahmetasche, die mittels aufgesetzter Taschenlagen gebildet ist, auf, wobei in diese Aufnahmetaschen die Endabschnitte eines, vorzugsweise klappbaren, Mophalters einsteckbar sind.

Derartige Reinigungsmops sind seit vielen Jahren handelsüblich und dienen zum Aufnehmen von Verunreinigungen auf ebenen Flächen, wie Böden oder Wänden. Derartige Reinigungsmops werden etwa zur Reinigung von Böden in Krankenhäusern oder Kliniken und anderen medizinischen Einrichtungen benutzt. In diesen Bereichen herrschen besonders strenge Anforderungen an die Hygiene, so dass die genannten Reinigungsmops bzw. Wischmopbezüge in vorgeschriebenen zeitlichen Abständen gereinigt und desinfiziert werden müssen. Die Reinigungsintervalle der Wischmops sind in Abhängigkeit von der mit den jeweiligen Wischmops bearbeiteten Fläche geregelt. Daher stellt sich zunächst das Problem, dass die Reinigungsintervalle der Wischmops überwacht werden müssen. Außerdem dürfen die besagten Wischmops nur eine vorgeschriebene Anzahl von Reinigungsintervallen durchlaufen, bis sie ausgetauscht werden müssen. Ein weiteres erhebliches Problem im Rahmen der Reinigung der genannten Wischmops besteht nun darin, dass die Reinigung sehr oft außerhalb der genannten Einrichtungen, also in Spezialreinigungen erfolgt. Es besteht also bei der Überwachung der Reinigungsintervalle ein zusätzliches Interesse, auch die Anzahl der Wischmops erfassen und kontrollieren zu können. Dieses Interesse wird insbesondere dadurch verstärkt, dass in den letzten Jahren in den genannten Einrichtungen ein kaum erklärlicher Schwund an den genannten Wischmops festgestellt wurde. Es ist weitgehend unklar, ob dieser Schwund auf das eingesetzte Klinikpersonal oder die genannten Reinigungseinrichtungen oder auf ganz andere Ursachen zurückzuführen ist. Dieses Problem konnte bisher nur dadurch angemessen gelöst werden, dass die zur Reinigung gegebenen Wischmops vor der Auslieferung gezählt wurden und nach deren Rückgabe die gereinigten Mops wiederum einer Zählung unterworfen wurden. Es versteht sich, dass die Zählung, insbesondere der von der Reinigung verschmutzten Wischmops, eine zeitaufwändige und nicht gerade angenehme Handarbeit ist.

Ausgehend von diesem Stand der Technik schlägt die DE 200 16 620 U1 den Einsatz der an sich bekannten RFID-Tags vor. Eine ausführliche Beschreibung dieser RFID-Tags und der in diesem Zusammenhang erreichten Technik findet sich etwa in der DE 101 55 935 A1.

Die RFID-Tags (Radio-Frequency-IDentification) bestehen im Wesentlichen aus kontaktlos abfragbaren Transpondersystemen. Es handelt sich hierbei um Schwingkreise mit einer definierten Resonanzfrequenz. Der Tag besteht dabei im Wesentlichen aus einer Antennenspule mit einer oder mehreren Windungen, welche elektrisch mit einem Chip gekoppelt ist. Sobald die erwähnte Antennenspule in das magnetische Wechselfeld einer Sendeantenne gebracht wird, wird eine induktive Kopplung zwischen der Sendeantenne und der Antennenspule des Tags erzeugt. Durch das elektromagnetische Wechselfeld wird in dem Tag eine elektrische Spannung induziert, die letztlich die Spannungsversorgung des in dem Schaltkreis integrierten Siliziumchips, des sogenannten "Transponder-IC's" sicherstellt. Alternativ wird bei den einfachen 1-Bit-Transpondern auf den genannten Siliziumchip verzichtet, so dass der RFID-Tag nur aus der genannten Antennenspule und einem aus einer Spule und einem Kondensator bestehenden Schwingkreis aufgebaut ist, wobei aufgrund der Anregung dieses Schwingkreises, vorzugsweise mit dessen Resonanzfrequenz, der RFID-Tag seinerseits das von der Sendeantenne aufgebaute magnetische Wechselfeld messbar schwächt. Mit Hilfe des 1-Bit-Transponders kann im Wesentlichen nur digital die Existenz eines solchen Transponders erfasst werden und nicht etwa die Inhalte eines Siliziumchips mit weiteren individuellen Daten ausgelesen werden. Die 1-Bit-Transponder werden beispielsweise zur Diebstahlsicherung in Kaufhäusern eingesetzt. Hier genügt es tatsächlich zu erfassen, ob ein derartiger Transponder, der beispielsweise mit einem Kleidungsstück fest verbunden ist, an einer zumeist im Ausgangsbereich eines Kaufhauses angeordneten Leseeinrichtung unbefugt - also ohne entsprechenden Bezahlvorgang - vorbeigeführt wird.

Diese Technik wird gemäß der DE 200 16 620 U1 nun mit Vorteil eingesetzt, um die erwähnten Wischmops zu zählen. Hierzu sind in einer entsprechenden Aufnahmetasche des Reinigungsmops die erwähnten RFID-Tags eingenäht, wobei es sich gemäß der vorbekannten Lösung nicht um 1-Bit-Transponder, sondern um Transponder mit einem integrierten Speicherchip handelt. Auf dem Chip sind den jeweiligen Reinigungsmops individualisierende Daten, wie etwa eine Seriennummer, das Herstellungsdatum, Angaben über den Hersteller, Angaben über den Eigentümer, also etwa der Name des Krankenhauses, sowie Angaben der ersten, zweiten bzw. letzten chemischen Reinigung des Reinigungsmops, zugeordnet. Der Speicherchip kann dabei sowohl gelesen, wie auch beschrieben werden. Hierzu muss der Reinigungsmop jeweils über ein Kartenlesegerät bzw. über ein Lese/Dateneingabegerät geführt werden.

Diese Lösung erlaubt es, den Zählvorgang der fraglichen Wischmops deutlich zu vereinfachen und überdies die genannten Reinigungsintervalle mit elektronischer Hilfe zu überwachen. Der mit einer derartigen Leseeinrichtung zu erzielende Automatisierungsgrad der Zählung bzw. der Erfassung der im Zusammenhang mit den Wischmops gespeicherten Daten hält sich gleichwohl in Grenzen. Um ein im elektromagnetischen Wechselfeld einer Sendeantenne angeordnetes RFID-Tag sicher erfassen zu können, muss zum Einen sichergestellt sein, dass der Abstand zwischen der Antenne zur Einkopplung der Betriebsspannung in die RFID-Tags und dem RFID-Tag selbst nicht zu groß wird. Derzeit geht man unter Einsatz der für die Umgebung noch verträglichen Feldstärken davon aus, dass der Abstand zwischen RFID-Tag und Antenne nicht größer als 30 cm sein darf.

Darüber hinaus muss die Anordnung des RFID-Tags relativ zur Sendeantenne unter Einhaltung einer bestimmten Ausrichtung erfolgen. Idealerweise wird der Tag mit der integrierten Spule an der Leseeinrichtung vorbeigeführt, so dass die von der Spule umschlossene Spulenfläche mehr oder minder parallel an der Spulenfläche der Sende-/Empfangsantenne vorbeigeführt wird. Hierdurch ist sichergestellt, dass die Feldlinien des von der Sende-/Empfangsantenne erzeugten elektromagnetischen Feldes die Spulenfläche nahezu orthogonal schneiden. Jedenfalls sollte der zwischen der Spulenfläche und der von der Antenne des Tags umschlossenen Fläche bestehende Winkel 45 Grad nicht übersteigen, da ansonsten eine hinreichende Durchdringung der Antennenspulenflache des RFID-Tags und damit die erforderliche induktive Einkopplung in den betreffenden Tag nicht mehr gewährleistet ist. Die sichere Erkennung und/oder ein sicheres Auslesen des RFID-Tags durch die jeweilige Sende-/Empfangsantenne ist dann nicht mehr gesichert.

Gemäß dem durch die DE 200 16 620 U1 repräsentierten Stand der Technik ist es zur Zählung und Kontrolle der Wischmops also weiterhin erforderlich, die Wischmops mehr oder minder exakt ausgerichtet an einer Sende- und Empfangsantenne, etwa mittels eines Laufbandes oder per Hand vorbeizuführen. Dies wird insbesondere in Verbindung mit einer großen Anzahl von Wischmops nach wie vor als unbefriedigend empfunden.

Die US 2004/164864 A1 beschreibt eine Erfassungsvorrichtung für Stückgüter mit einer Antennenvorrichtung zur induktiven Einkopplung einer Betriebsspannung in zumindest eine elektronische Markierung. Die Erfassungsvorrichtung weist weiterhin eine Leseeinheit auf zur Erfassung der von den Markierungen gesendeten Signale und zur Auswertung der Signale. Die Antennenvorrichtung umfasst zwei separate Antennen, die relativ zu einem quadratischen Rahmen in einem definierten Winkel (parallel, diagonal, gegenüberliegend) angeordnet sind. Die US 2004/164864 A1 stellt den nächstkommenden Stand der Technik dar.

Der Erfindung liegt daher die Aufgabe zugrunde, eine Erfassungsvorrichtung für Stückgüter, vorzugsweise für Textilien und/oder textile Gegenstände, zu schaffen, welche die vorstehend genannten Nachteile vermeidet und hierdurch eine weitgehend vollautomatische Zählung bzw. Erfassung der zu zählenden Stückgüter mit hoher Genauigkeit ermöglicht.

Die Lösung dieser Aufgabe gelingt durch eine Erfassungsvorrichtung gemäß den Merkmalen des Hauptanspruchs. Vorteilhafte Ausgestaltungen der erfindungsgemäßen Erfassungsvorrichtung sind den abhängigen Ansprüchen 2 bis 22 zu entnehmen.

Dadurch, dass die Antennenvorrichtung der Erfassungsvorrichtung vier Diagonalantennen umfasst, die zueinander in einem, vorzugsweise orthogonalen, Winkel angeordnet sind, ist sichergestellt, dass mehrere elektromagnetische Felder jeweils unterschiedlicher Ausrichtung im Raum erzeugt sind. Dies bedeutet wiederum, dass unabhängig von der jeweiligen Ausrichtung der zu zählenden, vorzugsweise textilen, Stückgüter gewährleistet ist, dass die RFID-Tags zumindest von den Feldlinien eines der beteiligten Felder geschnitten und somit die zur Aktivierung der elektronischen Markierung erforderlichen Voraussetzungen geschaffen sind. Durch die erfindungsgemäße Erfassungsvorrichtung kommt es also nicht länger auf eine bestimmte räumliche Ausrichtung der Stückgüter und der mit diesen unverlierbar verbundenen elektronischen Markierungen an. Die Erfassungsvorrichtung arbeitet auch bei zufälliger Anordnung der Stückgüter im Raum zuverlässig.

Die Antennen der Antennenvorrichtungen bestehen aus elektrischen Leitern zur Erzeugung eines elektromagnetischen Wechselfeldes in einer definierten Frequenz. Üblicherweise wird ein Wechselfeld mit 13,56 MHz erzeugt.

Weiterhin ist die Erfassungsvorrichtung mit einem Zählkorb versehen, wobei die einzelnen Antennen der Antennenvorrichtungen den Zählkorb vorzugsweise zumindest an zwei Seiten übergreifen. Durch die Dimensionierung des Zählkorbs in Abhängigkeit von der Feldstärke der Felder der eingesetzten Antennen ist sichergestellt, dass zumindest die elektronischen Markierungen der in dem Zählkorb aufgenommenen Stückgüter aktiviert und ausgelesen werden können.

In vorteilhafter Ausgestaltung besitzt der Zählkorb eine Quaderform und umfasst eine Bodenplatte, die jeweils von vier Seitenwänden begrenzt ist, wobei der Zählkorb nach oben geöffnet ist. Dies ermöglicht, die Stückgüter einfach oben in den Zählkorb zu deren Erfassung einzuwerfen oder einzulegen, bevor mit der eigentlichen Zählung begonnen wird.

Dabei erfasst die Erfassungsvorrichtung erfindungsgemäß eine Antennenvorrichtung mit vier Diagonalantennen, wobei jede Diagonalantenne zwei Diagonalabschnitte umfasst. Diese Diagonalantennen sind jeweils den Seitenwänden des Zählkorbs zugeordnet. Der Name der Diagonalantenne bzw. der Diagonalabschnitte der Diagonalantenne rührt daher, dass diese Antennen im Diagonalabschnitt jeweils diagonal über die jeweils zugehörige Seitenwand laufen. Es hat sich gezeigt, dass derartige diagonale Antennenanordnungen bei beliebiger Anordnung von Stückgütern innerhalb des Zählkorbs eine besonders vorteilhafte Anordnung darstellen, weil sie eine optimale Felddurchdringung bei zufällig angeordneten Stückgütern sicherstellen und somit allein diese Ergebnisse erzielen, die zwar keine 100- prozentige Genauigkeit aber für viele Anwendungen bereits eine ausreichende Genauigkeit bieten. Für den Fall, dass die Stückgüter mit RFID-Tags versehen sind, kann mit einem Fehlerquotienten von 5 - 10 %, der für die meisten Anwendungen ausreichend ist, bereits mit 4 Diagonalantennen ein hinreichend genaues Zählergebnis geliefert werden. Dabei bedeuten jeweils weniger Antennen geringere Abstimmungsprobleme sowie schnellere Zählergebnisse. Die Anordnung von vier Diagonalantennen mit jeweils zwei Diagonalabschnitten, wobei jeder Diagonalabschnitt einer Seitenwand zugeordnet ist, stellt also eine besonders einfache Ausgestaltung der Antennenvorrichtung der erfindungsgemäßen Erfassungsvorrichtung dar.

Alternativ zu der geschlossenen Quaderform besteht eine weitere Lösung zum Aufbau des Zählkorbs darin, diesen an zwei einander gegenüberliegenden Seiten geöffnet zu halten und den Zählkorb an sich beweglich aufzuhängen. Insbesondere wird hierbei eine Ausführung bevorzugt, bei welcher der Zählkorb vertikal beweglich ist und die in dieser Lage horizontal ausgerichteten Quaderseiten geöffnet sind. In dieser Ausgestaltung wird die Zählung dadurch ermöglicht, dass ein Behälter, mit den zu zählenden Stückgütern unter dem Zählkorb aufgestellt wird, und dieser so über den Behälter herabgelassen wird, dass die Antennenvorrichtung des Zählkorbs den Behälter umgreift. Auf diese Weise müssen die Stückgüter nicht noch einmal umgeladen werden, sondern können in dem etwa von der Wäscherei bereitgestellten Behälter verbleiben.

Erfindungsgemäß sind die Diagonalantennen so ausgebildet, dass sie jeweils zwei Diagonalabschnitte umfassen, die durch zwei Traversen verbunden sind, die vorzugsweise im Bereich einander gegenüberliegender Kanten des quaderförmigen Zählkorbs angeordnet sind. Eine derartige geometrische Anordnung stellt sicher, dass durch die Diagonalantennen die Geometrie des Zählkorbs nicht beeinträchtigt ist und somit eine besonders leichte Verankerung der Diagonalantennen mit dem Zählkorb möglich ist.

Auch im Bereich der Diagonalantennen empfiehlt sich eine diagonale Ausrichtung der erzeugten Felder, so dass es sinnvoll ist, wenn einer jeden Seitenwand ein Diagonalantennenpaar bzw. ein Paar Diagonalabschnitte zugeordnet sind, die einander vorzugsweise in einem Winkel von zumindest annähernd 90° kreuzen.

Eine weitere Verbesserung des mit der Erfassungsvorrichtung erreichbaren Zählergebnisses der Stückgüter kann dadurch erreicht werden, dass die Antennenvorrichtung zusätzlich dadurch aufgewertet wird, dass Sie neben den bereits erwähnten Diagonalantennen mit sechs weiteren sogenannten Rahmenantennen versehen ist. Die Rahmenantennen sind im Wesentlichen den x-/y- und z-Achsen des Zählkorbs derart zugeordnet, dass eine jede Rahmenantenne jeweils eine Begrenzungsfläche des Zählkorbs im Wesentlichen einfasst. Es handelt sich um sechs Rahmenantennen, weil einer jeden orthogonalen Ausrichtung, also in x-/y- und z-Richtung, jeweils zwei Rahmenantennen zugeordnet sind. Es handelt sich dabei üblicherweise um je eine Sende- und eine Empfangsantenne.

Die Kombination der beschriebenen Diagonal- und Rahmenantennen in Verbindung mit der ebenfalls beschriebenen Anordnung reicht einer zufälligen Anordnung von Stückgütern mit einer elektronischen Markierung, vorzugsweise einem RFID-Tag, innerhalb des Zählkorbs ein nahezu 100 % genaues Zählergebnis. Die Ursache hierfür liegt darin, dass aufgrund der speziellen geometrischen Anordnung der Antennen der Antennenvorrichtung sichergestellt ist, dass die elektronischen Markierungen bzw. die erwähnten RFID-Tags in jedem Falle im erforderlichen Maß und Winkel von den Feldlinien des Sendefelds durchdrungen werden.

Um eine Abstimmung der Antennenvorrichtung insgesamt leisten zu können, ist es allerdings erforderlich, dass jeder Antenne der Antennenvorrichtung zumindest eine separate Abstimmelektronik zugeordnet ist.

Im Falle der hier bevorzugten Verwendung von passiv arbeitenden elektronischen Markierungen, also insbesondere RFID-Tags, ist es erforderlich, dass die Antennenvorrichtung jeweils Sende- und Empfangsantennen umfasst, wobei jeder Sendeantenne eine Empfangsantenne zugeordnet ist und diese beiden zusammen jeweils ein Sende-/Empfangsantennenpaar ausbilden.

In der praktischen Ausführung hat sich gezeigt, dass bei gleichzeitiger Bestromung der Antennen nahezu unüberwindbare Einkopplungen und Antennenverstimmungen entstehen, die sich wiederum in unerwünschten Fehlern des Zählergebnisses niederschlagen. Diese Dämpfungs- und Verstimmungseffekte der Antennen können dadurch wirksam ausgeschlossen werden, dass die Antennen über einen Multiplexer entkoppelt bestrombar sind und somit auch eine Entkopplung der Zählergebnisse der einzelnen Antennen möglich ist.

Dieser Effekt wird zusätzlich dadurch gefördert, dass die Antennen mithilfe von Schaltelementen, beispielsweise Relais, elektrisch aufgetrennt werden. Dadurch ist eine Schwingung im wirksamen Bereich von 13,56 MHz verhindert und eine Einkopplung störender Effekte in benachbarte Antennen vermieden.

Der Multiplexer-Betrieb der Antennen wird idealerweise mittels einer zentralen Steuereinheit der Erfassungsvorrichtung derart organisiert, dass die über den Multiplexer angesteuerten Sendeantennen nacheinander bestromt sind und nacheinander die mittels der den jeweiligen Sendeantennen zugeordneten Empfangsantennen empfangenen Zählergebnisse erfasst werden. Über den Multiplexer wird also Kanal für Kanal und damit Antenne für Antenne durchgeschaltet und jeweils das im Mittel für eine Antenne erfasste Zählergebnis erfasst, wobei die Aufsummation der Zählergebnisse dann zur vollständigen Anzahl der in dem Zählkorb enthaltenen Stückgüter führt.

Dabei hat es sich jedoch bewährt, wenn der Erfassungsvorrichtung eine sogenannte Dublettenerkennung zugeordnet ist, wobei mittels der Leseeinrichtung nicht nur die Tatsache, dass ein Stückgut erkannt wurde, erfasst wird, sondern gleichzeitig eine der elektronischen Markierung der Stückgüter jeweils zugeordnete individuelle Erkennung erfasst und derart ausgewertet wird, dass das Zählergebnis um die hierdurch erkennbaren Dubletten reduziert wird. Der Durchschaltung der Kanäle im Multiplex-Betrieb und dem allmählichen Aufaddieren der eigentlichen Zählergebnisse werden also jeweils nur solche erfassten Stückgüter dem Zählergebnis zugeschlagen, die nicht bereits im Rahmen einer vorherigen Messung gezählt wurden. Auch dies stellt einen erheblichen Beitrag zur erreichbaren Genauigkeit des Zählergebnisses dar.

Ein übliches Problem beim Betrieb von Antennen stellt deren Anschluss über ein Koaxial-Kabel, hier beim Multiplexer, dar. Im Ergebnis wird über die Koaxial-Kabel ein asymmetrisches Signal auf die symmetrisch aufgebaute Schaltung gegeben, wobei die hierdurch entstehenden Probleme der Antennenverstimmung durch Zwischenschaltung sogenannter Baluns gelöst werden können. Die Zwischenschaltung von Baluns stellt an sich bekannte Schaltungstechnik im Token-Ring-Bereich dar.

In vorteilhafter Ausgestaltung umfasst die Erfassungsvorrichtung eine Datenverarbeitungsvorrichtung mit einem Speicherelement, so dass mittels der Datenverarbeitungsvorrichtung im Sinne eines Datenlockers die Messergebnisse für einen vorgebbaren Zeitraum aufgezeichnet und gespeichert werden können. Diese Protokollfunktion ist insbesondere bei der Diebstahlsverfolgung ausgesprochen hilfreich.

Die Erfassungsvorrichtung kann zusätzlich durch weitere Sensorik, wie etwa einen Feuchtemesser und/oder eine Temperaturerfassungsvorrichtung, ergänzt werden. Hierdurch können mögliche Fehlerquellen der Messung erkannt werden. Aus diesem Grund kann es auch hilfreich sein, die zur jeweiligen Messung eingesetzten Sendeleistungen der Sendeantennen in Verbindung mit dem Messergebnis zu protokollieren.

In vorteilhafter Ausgestaltung sind der Zählkorb und die Antennenvorrichtung jeweils mit einem feststehenden und einem lösbaren Teil versehen. Hierdurch kann die Befüllung des Antennenkorbs und dessen Demontage erleichtert sein.

Eine genaue Abstimmung der Empfangsantennen auf die Sendeantennen und auf die jeweiligen durchaus unterschiedlichen Umgebungsbedingungen beim Einsatz der Erfassungsvorrichtung wird dadurch ermöglicht, dass jeder Empfangsantenne ein Empfangsverstärker zugeordnet ist.

Eine mehr oder minder selbsttätige Abstimmung der Empfangsverstärker ist dadurch ermöglicht, dass die zentrale Steuereinrichtung die Empfangsverstärker der Empfangsantennen in Abhängigkeit vom Eingangspegel der Sende-/Empfangsantennen ansteuert.

In konkreter Ausgestaltung wird die Erfassungsvorrichtung insbesondere zur Erfassung von Wischmöppen eingesetzt, die in einfacher Weise in den Zählkorb gegeben werden. In den Wischmöppen kann ein RFID-Tag als elektronische Markierung eingearbeitet sein, wobei die RFID-Tags üblicherweise in geschlossenen Aufnahmetaschen der Wischmöppe bzw. des zu zählenden Stückguts unverlierbar aufgenommen sind.

Die Sende-/Empfangsantennen mit mehreren, vorzugsweise zwei, parallel angeordneten Spulen sind mit dem feststehenden Teil des Zählkorbs verbunden, während die einfachen Empfangsantennen mit dem trennbaren Teil des Zählkorbs verbunden sind.

Zusätzlich sind die Empfangsantennen mit einem Empfangsverstärker verbunden, um so eine höhere Empfindlichkeit der Antennenvorrichtung für die von den elektronischen Markierungen gesendeten Signale zu erzielen. Der Verstärker erlaubt es, mit geringeren Feldstärken zur Aktivierung der elektronischen Markierungen zu arbeiten.

In abermals vorteilhafter Ausgestaltung ist der Verstärkungsfaktor des Empfangsverstärkers in Abhängigkeit vom Eingangspegel der Sende-/Empfangsantenne gewählt, d. h. dass bei entsprechend größerer Bitstärke zur Aktivierung von elektronischen Markierungen der Empfangsverstärker bedarfsweise herunter geregelt werden kann.

Im Falle der Ausgestaltung der elektronischen Markierungen als intelligente RFID-Tags mit integriertem Chip kann gleichzeitig mit der Zählung auch eine Überwachung der Reinigungsintervalle und anderer individueller Merkmale erfolgen.

Die Erfindung wird nachstehend anhand eines in der Zeichnung nur schematisch dargestellten Ausführungsbeispiels näher erläutert.

Es zeigen:
- Fig. 1:: ein Prinzipschaltbild einer Erfassungsvorrichtung mit einer Antennenvorrichtung,
- Fig. 2:: die Antennenvorrichtung der in Fig. 1 gezeigten Erfassungsvorrichtung im geschlossenen Zustand in einer perspektivischen Darstellung und
- Fig. 3:: die Antennenvorrichtung der in Fig. 1 gezeigten Erfassungsvorrichtung in einer separierten Darstellung von Rahmen- und Diagonalantennen jeweils in einer perspektivischen Darstellung.

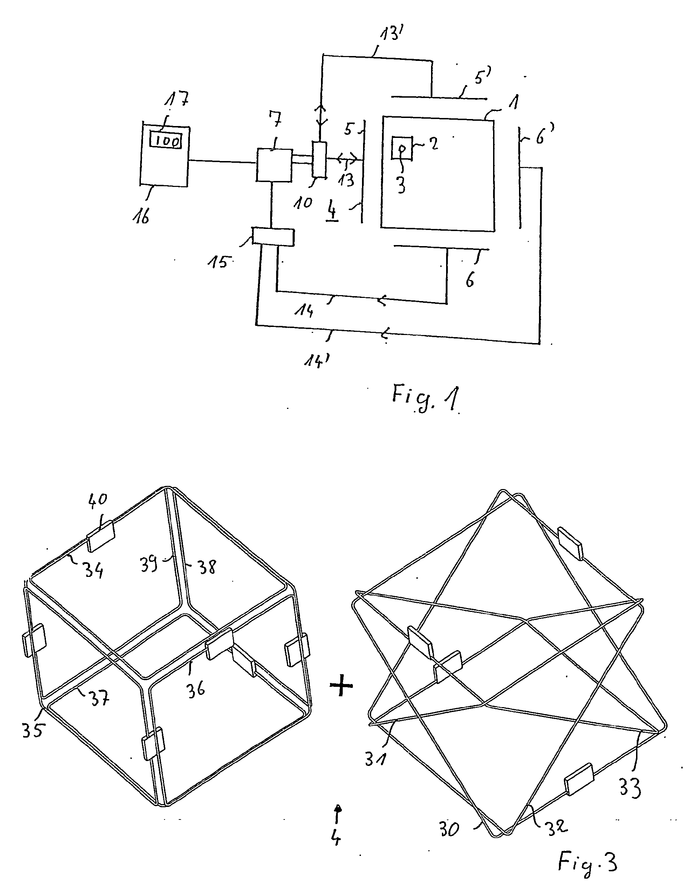

Gemäß der Darstellung in Figur 1 umfasst die Erfassungsvorrichtung einen Zählkorb 1 zur Aufnahme eines Behälters mit zu zählenden Stückgütern 2, die mit einer kontaktlos auswertbaren elektronischen Markierung 3 versehen sind. Dabei handelt es sich bei der elektronischen Markierung 3 vorzugsweise um einen Transponder, bzw. um ein RFID-Tag. Unter RFID-Tags versteht man passive Schwingkreise, in denen ein Siliziumchip mit einem Datenspeicher angeordnet ist. Der Schwingkreis kann über eine Sendeantenne durch aktive Einkopplung einer Betriebsspannung in einem elektromagnetischen Wechselfeld bestromt werden. Die induktive Einkopplung liefert dann die für den Siliziumchip benötigte Betriebsspannung, der daraufhin die gespeicherten Daten an eine Empfangsantenne sendet.

Im vorliegenden Falle ist hierzu dem Zählkorb 1 eine Antennenvorrichtung 4 zugeordnet, welche die Sende-/Empfangsantennen 5, 5' sowie zwei reine Empfangsantennen 6, 6' umfasst. Die Antennen 5, 5' und 6, 6' sind in unterschiedlicher Ausrichtung im Raum angeordnet. Vorliegend sind sie mit den Seitenwandungen des Zählkorbs 1 in hier nicht weiter dargestellter Weise fest verbunden. Hierdurch ist sichergestellt, dass die innerhalb des Zählkorbs 1 befindlichen Stückgüter 2 mehreren elektromagnetischen Feldern unterschiedlicher Ausrichtung ausgesetzt sind. Hierdurch ist wiederum sichergestellt, dass die Stückgüter 2 unabhängig von ihrer zufälligen Ausrichtung im Raum bzw. genauer gesagt innerhalb des Zählkorbs 1 jeweils von den Feldlinien der mittels der Sende-/Empfangsantennen 5, 5' erzeugten elektromagnetischen Feldern so durchdrungen werden, dass die benötigte Betriebsspannung in jeden innerhalb des Zählkorbs 1 befindlichen RFID-Tag sicher eingekoppelt wird. Hierdurch ist wiederum sichergestellt, dass die von den RFID-Tags gesendeten Signale von den Empfangsantennen 6, 6' wie auch von den Sende-/Empfangsantennen 5, 5' sicher empfangen werden können.

Dabei werden die Sende-/Empfangsantennen 5, 5' von einer gemeinsamen zentralen Steuereinrichtung 7 über einen Multiplexer 10 angesteuert. Der Multiplexer 10 ist an einen Sende- und einem Empfangskanal 11 bzw. 12 der zentralen Steuereinrichtung 7 angeschlossen. Der Multiplexer 10 ist dann jeweils über eine bidirektionale Datenverbindung 13, 13' mit den angeschlossenen Sende-/Empfangsantennen 5, 5' datenverbunden. Die reinen Empfangsantennen 6, 6' sind dagegen über eine unidirektionale Datenverbindung 14, 14' über einen weiteren Multiplexer 15 mit der zentralen Steuerungseinheit 7 verbunden.

Über die Sende-/Empfangseinheit 5, 5' wird zunächst das zur Einkopplung der erforderlichen Betriebsspannung erforderliche elektromagnetische Wechselfeld erzeugt. Nach Abschaltung des Feldes senden die Tags dann die in den Chips enthaltenen Daten zur Kennung der Stückgüter 2, die von den Antennen 5, 5', 6, 6' der Antennenvorrichtung 4 empfangen und zur weiteren Auswertung an die zentrale Steuereinrichtung 7 übermittelt werden. Der zentralen Steuerungseinrichtung 7 ist ein Zähler 16 zur Anzeige des Zählergebnisses zugeordnet. Hierzu weist der Zähler 16 eine Anzeigevorrichtung 17 auf.

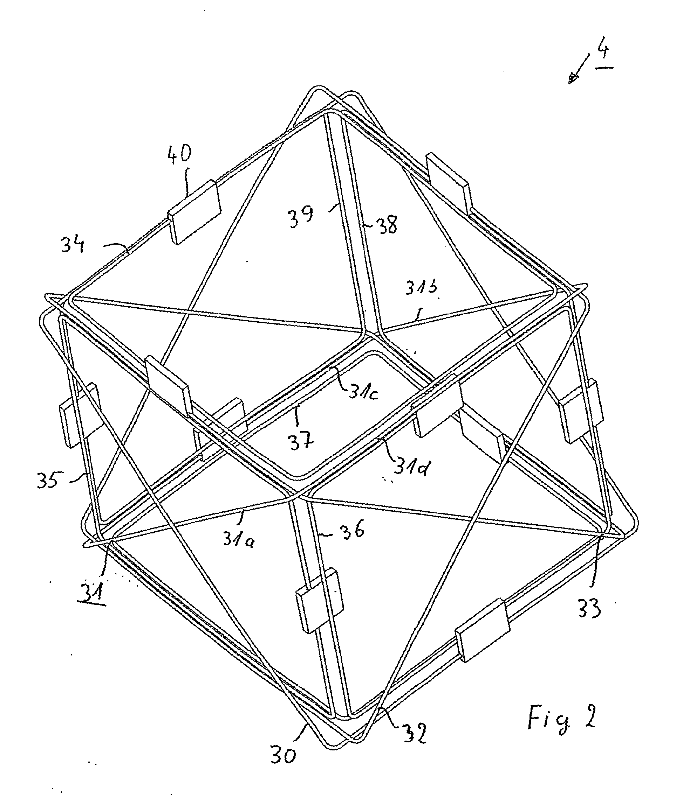

Die konkrete Ausgestaltung der Antennenvorrichtung 4 ist in Fig. 2 in einer perspektivischen Darstellung gezeigt. Die Antennenvorrichtung 4 besteht im Wesentlichen aus vier Diagonalantennen 30, 31, 32 und 33 sowie sechs Rahmenantennen 34 - 39. Dabei bestehen die Diagonalantennen jeweils aus zwei Diagonalabschnitten 31a und 31b, die durch Traversen 31c und 31d miteinander verbunden sind, wie beispielhaft für die Diagonalantenne 31 in Fig. 2 gezeigt. Die weiteren Diagonalantennen 30, 32 und 33 besitzen einen analogen Aufbau.

Die Antennenvorrichtung 4 umfasst dabei einen in Fig. 2 nicht weiter dargestellten Zählkorb, der üblicherweise vier Seitenwände besitzt und vertikal verschieblich aufgehängt ist. Die Rahmenantennen 34 - 39 umfassen dabei jeweils die Begrenzungsflächen des quaderförmigen Zählkorbs. Die Diagonalantennen sind so angeordnet, dass jeweils die Traversen im Bereich der Kanten des Quaders angeordnet sind, wobei die Länge der Traversen 31c und 31d jeweils die Länge der Begrenzungskanten des Zählkorbs wenig übersteigt, so dass die Diagonalabschnitte 31a und 31b jeweils außenwändig der Seitenwände des Zählkorbs 1 angeordnet sind. Dabei sind die Diagonalantennen 31 - 33 dem Zählkorb 1 derart zugeordnet, dass jeder Seitenwand des Zählkorbs 1 je zwei sich in einem Winkel von 90° kreuzende Diagonalabschnitte zugeordnet sind.

Dabei ist einer jeden Antenne 30 - 39 je eine individuelle Abstimmvorrichtung 40 zugeordnet. Die geometrische Anordnung der in Fig. 2 perspektivisch dargestellten Antennenvorrichtung kann durch die separierte Darstellung in Fig. 3 noch besser nachvollzogen werden. Wie durch das Additionszeichen in Fig. 3 verkörpert, besteht die Antennenvorrichtung 4 also aus der Anordnung der Rahmenantennen in der linken Darstellung und der Diagonalantennen in der rechten Darstellung.

Nachstehend wird die Funktion der Antennenvorrichtung in den Fig. 2 und Fig. 3 noch einmal im Zusammenhang erläutert.

Wie bereits eingangs erläutert, ist es zur Erfassung von mir RFID-Tags gekennzeichneten Stückgütern erforderlich, dass die in den RFID-Tags erhaltene Induktionsschleife von den Feldlinien der Sendeantennen zumindest in einem Winkel von 45° zu der von der Spule des RFID-Tags aufgezeichneten Spulenfläche durchdringen. Diese kann bei einer zufälligen und ungeordneten Anordnung von Stückgütern nur dadurch erreicht werden, dass mehrere Feldlinien im Winkel zueinander angeordnet werden. Praktische Versuche haben dabei ergeben, dass bereits mit einer Diagonalanordnung mit nur zwei Diagonalantennen, die zueinander in einer entsprechenden Anordnung angeordnet sind, sehr gute Zählergebnisse erzielt werden können. In abermaliger Verbesserung empfiehlt es sich jedoch, eine Anordnung mit vier Diagonalantennen gem. Fig. 3 zu wählen. Bei dieser Anordnung werden bereits im Zusammenhang mit der vorstehend erläuterten Wischmop-Zählung innerhalb eines Zählkorbs 1, der in Fig. 1 dargestellt ist, Genauigkeiten erzielt, deren Abweichung im einstelligen Prozentbereich liegt.

In den allermeisten Fällen dürfte ein solches Wischmop-Ergebnis vollkommen ausreichen. Weiter verbessert werden kann das Zählergebnis dadurch, dass die Anordnung der Diagonalantennen gemäß der rechten Darstellung in Fig. 3 durch eine Anordnung von Rahmenantennen gemäß der linken Darstellung in Fig. 3 ergänzt wird.

Die Antennen müssen dabei jeweils als Antennenpaare von Sende- und Empfangsantennen verstanden werden. Mittels der Sendeantennen werden die passiven Schwingkreise der RFID-Tags induktiv bestromt, wobei diese Anregung der induktiven Schwingkreise der RFID-Tags ausreicht, um diese ihrerseits als Sender zu aktivieren, so dass die in den RFID-Tags enthaltenen Chip-Kennungen induktiv übermittelt werden. Diese induktiven RFID-Kennungen können dann mit den Empfangsantennen ausgewertet und einer weiteren Datenerfassungsvorrichtung zugeführt werden. Im Falle einer Antennenvorrichtung gemäß Fig. 2 wird dabei für die vordringliche Aufgabe im Rahmen der Erfindung, der Wischmop-Zählung, ein nahezu 100-prozentiges Zählergebnis erzielt. Dabei sind die einzelnen Antennen über einen Multiplexer betrieben, der jeder Antenne der Antennenvorrichtung 4 einen einzelnen Kanal zuordnet, so dass die Sendeantennen von dem Multiplexer nacheinander bestromt werden können. Entsprechend sprechen auch die Empfangsantennen nacheinander an, so dass das korrekte Zählergebnis dadurch erzielt wird, dass die Fehlergebnisse der einzelnen Empfangsantennen aufaddiert werden. Dabei ist der Erfassungsvorrichtung idealerweise eine Dublettenerkennung zugeordnet, die auch die individuellen Kennungen der RFID-Tags auswertet und dabei erkennt, ob ein RFID-Tag bereits im Zusammenhang mit einer vorhergegangenen Zählung detektiert wurde. Derartige Dubletten werden nicht dem weiteren Zählergebnis zugeführt, so dass Fehler durch entsprechende Doppelzählungen wirksam vermieden sind.

In vorteilhafter Ausgestaltung können der Erfassungsvorrichtung weitere Sensoren wie etwa eine Temperaturmessung oder eine Feuchtemessung zugeordnet sein, die im Zusammenhang mit der Erfassung der Zählbedingungen, aber auch des Zustands der Wischmöppe von zusätzlicher Bedeutung sein können. Die Anlage wird üblicherweise in Verbindung mit einem Speicherelement betrieben, von dem die Messungen und deren Umstände protokolliert werden. Die Protokollierung der Zählergebnisse ist wichtig, um somit gezielt etwaigen Verlustanzeigen beispielsweise im Eingangsbereich von Wäschereinigungen und ähnlichem nachgehen zu können.

Im Unterschied zum Stand der Technik liegt der Vorteil der erfindungsgemäßen Erfassungsvorrichtung darin, dass die fragliche Einrichtung auch bei beliebiger Anordnung der Stückgüter 2 innerhalb des Zählkorbs 1 zuverlässig arbeitet.

### BEZUGSZEICHENLISTE

- 1: Zählkorb
- 2: Stückgüter
- 3: elektronische Markierung
- 4: Antennenvorrichtung
- 5,5': Sende-/Empfangsantenne
- 6,6': Empfangsantenne
- 7: zentrale Steuereinrichtung
- 10: Multiplexer
- 11: Sendekanal
- 12: Empfangskanal
- 13,13': bidirektionale Datenverbindung
- 14,14': unidirektionale Datenverbindung
- 15: weiterer Multiplexer
- 16: Zähler
- 17: Anzeigevorrichtung
- 31a,31b: Diagonalabschnitt
- 31c,31d: Traversen
- 30 - 33: Diagonalantenne
- 34 - 39: Rahmenantenne
- 40: Abstimmungselement

## Patentansprüche

1. Erfassungsvorrichtung für Stückgüter, vorzugsweise Textilien und/oder textile Gegenstände, mit einer Antennenvorrichtung zur induktiven Einkopplung einer Betriebsspannung in jeweils zumindest eine elektronische Markierung (3), die jeweils unverlierbar mit den zu zählenden Stückgütern (2) verbunden ist, einer Leseeinheit zur Erfassung der von den elektronischen Markierungen (3) gesendeten Signale, sowie einem der Leseeinrichtung nachgeschalteten Zähler (16) zur Bestimmung der jeweiligen Anzahl der Stückgüter (2) durch Auswertung der mittels der Leseeinrichtung empfangenen Signale der elektronischen Markierungen (3), wobei die Antennenvorrichtung (4) zur Erzeugung jeweils zweier elektromagnetischer Felder unterschiedlicher, vorzugsweise einander orthogonaler, Ausrichtung, wenigstens zwei separate Antennen umfasst, die zueinander in einem definierten, vorzugsweise rechten, Winkel angeordnet sind,
**dadurch gekennzeichnet, dass**
die der Erfassungsvorrichtung zugeordnete Antennenvorrichtung vier Diagonalantennen mit jeweils zwei Diagonalabschnitten umfasst, jeder Seitenwand eines Zählkorbs (1) je zwei sich kreuzende Diagonalabschnitte zugeordnet sind, und die einander gegenüberliegenden Diagonalabschnitte einander gegenüberliegender Seitenwände zueinander parallel ausgerichtet sind und zu einer Diagonalantenne zusammengefasst sind, wobei die Diagonalabschnitte der Diagonalantennen durch zwei Traversen verbunden sind, die vorzugsweise im Bereich einander gegenüberliegender Kanten des quaderförmigen Zählkorbs (1) angeordnet sind.

2. Erfassungsvorrichtung nach Anspruch 1 **dadurch gekennzeichnet, dass** jede Antenne der Antennenvorrichtung (4) einen elektrischen Leiter umfasst, wobei dieser Leiter derart ausgeformt ist, dass dieser zumindest annähernd einen geschlossenen Rahmen ausbildet.

3. Erfassungsvorrichtung nach Anspruch 1 oder 2, **dadurch gekennzeichnet, dass** der der Erfassungsvorrichtung zugeordnete Zählkorb (1) ein zumindest teilweise geschlossener Zählkorb (1) zur Aufnahme der zu zählenden Stückgüter (2) ist, wobei die Antennenvorrichtung (4) den Zählkorb (1) zumindest an zwei Seiten übergreift.

4. Erfassungsvorrichtung nach Anspruch 3, **dadurch gekennzeichnet, dass** der quaderförmige Zählkorb (1) eine Bodenplatte und vier Seitenwände umfasst und nach oben geöffnet ist.

5. Erfassungsvorrichtung nach Anspruch 1 oder 2, **dadurch gekennzeichnet, dass** der der Erfassungsvorrichtung zugeordnete Zählkorb (1) beweglich aufgehängt und an zwei einander gegenüberliegenden Seiten geöffnet ist.

6. Erfassungsvorrichtung nach einem der vorhergehenden Ansprüche, **dadurch gekennzeichnet, dass** sich die Diagonalabschnitte in einem Winkel von zumindest annähernd 90 Grad kreuzen.

7. Erfassungsvorrichtung nach einem der vorhergehenden Ansprüche, **dadurch gekennzeichnet, dass** die dem Zählkorb (1) zugeordnete Antennenvorrichtung (4) sechs weitere Rahmenantennen umfasst, wobei jede Rahmenantenne einer Begrenzungsfläche des Zählkorbs, mithin den 4 Seitenwänden, der Bodenplatte und der geöffneten Deckelfläche des Zählkorbs (1) derart zugeordnet sind, dass jede Rahmenantenne die jeweilige Begrenzungsfläche zumindest im Wesentlichen einfasst.

8. Erfassungsvorrichtung nach Anspruch 7, **dadurch gekennzeichnet, dass** jeder Antenne der Antennenvorrichtung (4) zumindest eine separate Abstimmelektronik zugeordnet ist.

9. Erfassungsvorrichtung nach einem der vorhergehenden Ansprüche, **dadurch gekennzeichnet, dass** die Antennen der Antennenvorrichtung Sende- und Empfangsantennen umfasst, wobei jeder Sendeantenne je eine Empfangsantenne zugeordnet ist, so dass beide ein Sende-/Empfangsantennenpaar bilden.

10. Erfassungsvorrichtung nach Anspruch 9, **dadurch gekennzeichnet, dass** die Antennen mittels eines Multiplexers entkoppelt bestrombar sind.

11. Erfassungsvorrichtung nach Anspruch 10, **dadurch gekennzeichnet, dass** die Antennen mithilfe jeweils zumindest eines Schaltelements elektrisch auftrennbar ist.

12. Erfassungsvorrichtung nach Anspruch 10 oder 11, **dadurch gekennzeichnet, dass** jedem Sende- und Empfangsantennenpaar ein separater Eingang und Ausgangskanal des Multiplexers zugewiesen ist.

13. Erfassungsvorrichtung nach Anspruch 10, 11 oder 12, **dadurch gekennzeichnet, dass** die Erfassungsvorrichtung eine zentrale Steuereinheit (7) umfasst, mittels derer die über den Multiplexer angesteuerten Sendeantennen nacheinander bestrombar sind und die mittels der Empfangsantennen ermittelten Zählergebnisse nacheinander ermittelt werden.

14. Erfassungsvorrichtung nach einem der Ansprüche 12 oder 13, **dadurch gekennzeichnet, dass** der zentralen Steuereinheit (7) eine Dublettenerkennung zugeordnet ist, die durch Auswertung der mittels der Leseeinrichtung empfangenen Signale der elektronischen Markierungen (3), insbesondere der einer jeden elektronischen Markierung zugeordneten individuellen Kennung, etwaige Mehrfachzählungen der nacheinander ausgewerteten Empfangsantennen erkennt und das Zählergebnis um diese Dubletten reduziert.

15. Erfassungsvorrichtung nach einem der vorhergehenden Ansprüche, **dadurch gekennzeichnet, dass** die Antennen der Antennenvorrichtung jeweils über ein Koaxialkabel am Multiplexer unter Zwischenschaltung je eines Baluns angeschlossen sind.

16. Erfassungsvorrichtung nach einem der vorhergehenden Ansprüche, **dadurch gekennzeichnet, dass** die Erfassungsvorrichtung eine Datenverarbeitungsvorrichtung mit einem Speicherelement umfasst, das in Funktion eines Datenloggers die Messergebnisse für einen vorgebbaren Zeitraum aufzeichnet und speichert.

17. Erfassungsvorrichtung nach Anspruch 16, **dadurch gekennzeichnet, dass** die Erfassungsvorrichtung neben der Antennenvorrichtung weitere Sensorik, insbesondere wenigstens einen Feuchtemesser und/oder wenigstens eine Temperaturerfassungsvorrichtung umfasst, die jeweils ebenfalls mit der Datenverarbeitungsvorrichtung datenverbunden sind.

18. Erfassungsvorrichtung nach Anspruch 16 oder 17, **dadurch gekennzeichnet, dass** mittels der Datenerfassungsvorrichtung zu jeder Messung die jeweils eingesetzte Sendeleistung der Sendeantennen erfass- und speicherbar ist.

19. Erfassungsvorrichtung nach einem der vorhergehenden Ansprüche, **dadurch gekennzeichnet, dass** der Zählkorb (1) und die Antennenvorrichtung (4) jeweils einen feststehenden und einen lösbaren Teil besitzen, wobei der feststehende Teil des Zählkorbs (1) jeweils mit dem feststehenden Teil der Antennenvorrichtung (4) und der lösbare Teil des Zählkorbs (1) mit dem lösbaren Teil der Antennenvorrichtung (4) verbunden ist.

20. Erfassungsvorrichtung nach einem der vorhergehenden Ansprüche, **dadurch gekennzeichnet, dass** die Empfangsantennen der Antennenvorrichtung (4) jeweils mit einem Empfangsverstärker verbunden sind.

21. Erfassungsvorrichtung nach Anspruch 20, **dadurch gekennzeichnet, dass** die zentrale Steuereinrichtung (7) den Empfangsverstärker in Abhängigkeit vom Eingangspegel der Sende-/Empfangsantennen ansteuert.

22. Erfassungsvorrichtung nach einem der vorhergehenden Ansprüche, **dadurch gekennzeichnet, dass** die zu zählenden Stückgüter (2), insbesondere Wischmöppe, jeweils mit zumindest einem RFID-Tag als elektronische Markierung (3) versehen sind, wobei jeder RFID-Tag in einer geschlossenen Aufnahmetasche des Stückguts (2) unverlierbar aufgenommen ist.

## Claims

1. Capture device for piece goods, preferably textiles and/or textile items, having an antenna device for the inductive input of an operating voltage into, in each case, at least one electronic tag (3) each of which is captively connected to the piece goods (2) to be counted, a read unit for capturing the signals sent by the electronic tags (3) as well as a counter (16) connected downstream of the read device for determining the number of piece goods (2) at any time by evaluating the signals from the electronic tags (3) received by means of the read device, wherein for generating in each case two electromagnetic fields of different orientation, preferably orthogonal to one another, the antenna device (4) comprises at least two separate antennae which are arranged relative to one another at a defined, preferably right, angle, **characterised in that** the antenna device assigned to the capture device comprises four diagonal antennae each having two diagonal segments, to each side wall of a counting cage (1) two diagonal segments adjoining [?; manuscript amendment barely legible] one another are assigned and the diagonal segments opposite one another of side walls opposite one another are oriented parallel to one another and are assembled to form a diagonal antenna, wherein the diagonal segments of the diagonal antennae are connected by two traverses which are preferably arranged in the region of opposite edges of the cuboid-shaped counting cage (1).

2. Capture device according to claim 1, **characterised in that** each antenna in the antenna device (4) comprises an electrical conductor, wherein this conductor is shaped in such a way that it forms at least approximately a closed frame.

3. Capture device according to claim 1 or 2, **characterised in that** the counting cage (1) assigned to the capture device is an at least partially closed counting cage (1) for receiving the piece goods (2) to be counted, wherein the antenna device (4) engages over the counting cage (1) on at least two sides.

4. Capture device according to claim 3, **characterised in that** the cuboid-shaped counting cage (1) comprises a base plate and four side walls and is open at the top.

5. Capture device according to claim 1 or 2, **characterised in that** the counting cage (1) assigned to the capture device is suspended movably and open on two sides opposite one another.

6. Capture device according to any of the preceding claims, **characterised in that** the diagonal segments intersect at an angle of at least approximately 90 degrees.

7. Capture device according to any of the preceding claims, **characterised in that** the antenna device (4) assigned to the counting cage (1) comprises six further frame antennae, wherein each frame antenna is assigned to a boundary surface of the counting cage and so to the four side walls, the base plate and the open top surface of the counting cage (1) in such a way that each frame antenna encloses at least substantially the boundary surface in question.

8. Capture device according to claim 7, **characterised in that** to each antenna of the antenna device (4) at least one separate tuning electronic circuit is assigned.

9. Capture device according to any of the preceding claims, **characterised in that** the antennae of the antenna device comprises transmission and receive antennae, wherein to each transmission antenna a receive antenna is assigned so that both form a transmit/receive antenna pair.

10. Capture device according to claim 9, **characterised in that** the antennae are powerable in decoupled manner by means of a multiplexer.

11. Capture device according to claim 10, **characterised in that** the antennae are electrically isolable with the aid in each case of at least one switching element.

12. Capture device according to claim 10 or 11, **characterised in that** a separate input and output channel of the multiplexer is allocated to each transmit and receive antenna pair.

13. Capture device according to claim 10, 11 or 12, **characterised in that** the capture device comprises a central control unit (7) by means of which the transmit antennae controlled via the multiplexer are powerable one after the other and the counting results determined by means of the receive antennae are determined one after the other.

14. Capture device according to one of claims 12 or 13, **characterised in that** doublet identification is assigned to the central control unit (7), which identification by evaluation of the signals of the electronic tags (3), in particular of the individual marker assigned to each electronic tag, received by means of the read device recognises any multiple counts from the successively evaluated receive antennae and reduces the count result by these doublets.

15. Capture device according to any of the preceding claims, **characterised in that** the antennae of the antenna device are each connected via a coaxial cable to the multiplexer with interposition of a balun in each case.

16. Capture device according to any of the preceding claims, **characterised in that** the capture device comprises a data processing device having a memory element which records and stores the measured results for a specifiable period in the operation of a data logger.

17. Capture device according to claim 16, **characterised in that** the capture device comprises in addition to the antenna device other sensor systems, in particular at least one moisture measuring instrument and/or at least one temperature measuring device which likewise each have a data connection to the data processing device.

18. Capture device according to claim 16 or 17, **characterised in that** for each measurement the transmission power of the transmit antennae is measurable and storable by means of the data capture device.

19. Capture device according to any of the preceding claims, **characterised in that** the counting cage (1) and the antenna device (4) each possess a fixed and a detachable part, wherein the fixed part of the counting cage (1) is connected in each case to the fixed part of the antenna device (4) and the detachable part of the counting cage (1) to the detachable part of the antenna device (4).

20. Capture device according to any of the preceding claims, **characterised in that** the receive antennae of the antenna device (4) are each connected to a receive amplifier.

21. Capture device according to claim 20, **characterised in that** the central control device (7) controls the receive amplifier as a function of the input level of the transmit/receive antennae.

22. Capture device according to any of the preceding claims, **characterised in that** the piece goods (2) to be counted, in particular cleaning mops, are each provided with at least one RFID tag as electronic tag (3), wherein each RFID tag is captively accommodated in a closed receptacle pocket of the item of piece goods (2).

## Revendications

1. Dispositif de détection pour des produits en morceaux, de préférence des textiles et/ou des objets textiles, avec un dispositif d'antenne pour le couplage inductif d'une tension de fonctionnement dans chaque fois au moins un marquage (3) électronique, relié chaque fois de manière imperdable aux produits en morceaux (2) à compter, une unité de lecture pour détecter les signaux émis par les marquages (3) électroniques, ainsi qu'un compteur (16), installé en aval du dispositif de lecture, pour déterminer le nombre respectif de produits en morceaux (2), par évaluation des signaux, reçus au moyen du dispositif de lecture, produits par les marquages (3) électroniques, le dispositif à antenne (4) comprenant, pour produire chaque fois deux champs électromagnétiques d'orientation différente, de préférence mutuellement perpendiculaires, au moins deux antennes séparées, disposées les unes par rapport aux autres selon un angle défini, de préférence un angle droit,
**caractérisé en ce que**
le dispositif d'antenne associé au dispositif de détection comprend quatre antennes en diagonale, ayant chacune deux tronçons de diagonale, à chaque paroi latérale d'un panier de comptage (1) sont associés respectivement deux tronçons de diagonale se croisant, et les tronçons de diagonale, opposés les uns aux autres, de parois latérales opposées les unes aux autres étant orientés parallèlement les uns aux autres et regroupés en formant une antenne en diagonale, les tronçons de diagonale des antennes en diagonale étant reliés par deux traverses, disposées de préférence dans la zone d'arêtes, opposées les unes aux autres, du panier de comptage (1) à forme parallélépipédique.

2. Dispositif de détection selon la revendication 1, **caractérisé en ce que** chaque antenne du dispositif à antenne (4) comprend un conducteur électrique, ce conducteur étant façonné de manière que celui-ci forme, au moins à peu près, un cadre fermé.

3. Dispositif de détection selon la revendication 1 ou 2, **caractérisé en ce que** le panier de comptage (1) associé au dispositif de détection est un panier de comptage (1) au moins partiellement fermé, pour recevoir les produits en morceaux (2) à compter, le dispositif à antenne (4) entourant le panier de comptage (1) au moins sur deux côtés.

4. Dispositif de détection selon la revendication 3, **caractérisé en ce que** le panier de comptage (1) à forme parallélépipédique comprend une plaque de fond et quatre parois latérales et est ouvert vers le haut.

5. Dispositif de détection selon la revendication 1 ou 2, **caractérisé en ce que** le panier de comptage (1) associé au dispositif de détection est suspendu de manière mobile et ouvert sur deux côtés mutuellement opposés.

6. Dispositif de détection selon l'une des revendications précédentes, **caractérisé en ce que** les tronçons en diagonale se croisent sous un angle d'au moins à peu près 90 degrés.

7. Dispositif de détection selon l'une des revendications précédentes, **caractérisé en ce que** le dispositif à antenne (4) associé au panier de comptage (1) comprend six autres antennes en cadres, chaque antenne en cadre étant associée à une surface de délimitation du panier de comptage, avec les 4 parois latérales, la plaque de fond et la surface de couvercle ouverte du panier de comptage (1), de manière que chaque antenne en cadre borde au moins sensiblement la surface de délimitation respective.

8. Dispositif de détection selon la revendication 7, **caractérisé en ce qu'**à chaque antenne du dispositif à antenne (4) est associé au moins une électronique d'accord séparée.

9. Dispositif de détection selon l'une des revendications précédentes, **caractérisé en ce que** les antennes du dispositif à antenne comprennent des antennes d'émission et de réception, à chaque antenne d'émission étant associée une antenne de réception, de manière que les deux forment une paire d'antennes d'émission/de réception.

10. Dispositif de détection selon la revendication 9, **caractérisé en ce que** les antennes sont susceptibles d'être alimentées électriquement au moyen d'un multiplexeur.

11. Dispositif de détection selon la revendication 10, **caractérisé en ce que** les antennes sont susceptibles d'être isolées électriquement à l'aide chaque fois d'au moins un élément de commutation.

12. Dispositif de détection selon la revendication 10 ou 11, **caractérisé en ce qu'**à chaque paire d'antennes d'émission/de réception est affecté une entrée séparée et un canal de sortie du multiplexeur.

13. Dispositif de détection selon la revendication 10, 11 ou 12, **caractérisé en ce que** le dispositif de détection comprend une unité de commande (7) centrale, au moyen de laquelle les antennes d'émission, commandées par l'intermédiaire du multiplexeur, sont susceptibles d'être alimentées électriquement les unes après les autres, et les résultats de comptage, déterminés au moyen des antennes de réception, étant déterminés les uns après les autres.

14. Dispositif de détection selon l'une des revendications 12 ou 13, **caractérisé en ce qu'**à l'unité de commande (7) centrale est associée une identification des doublons qui, par évaluation des signaux reçus au moyen du dispositif de lecture et émis par les marquages (3) électroniques, en particulier de l'identification individuelle associé à chaque marquage électronique, identifie les éventuels comptages multiples des antennes de réception évaluées les unes après les autres et réduit le résultat de comptage en omettant ces doublons.

15. Dispositif de détection selon l'une des revendications précédentes, **caractérisé en ce que** les antennes du dispositif à antenne sont chacune raccordées, par l'intermédiaire d'un câble coaxial, au multiplexeur, avec branchement intermédiaire chaque fois d'un balun.

16. Dispositif de détection selon l'une des revendications précédentes, **caractérisé en ce que** le dispositif de détection comprend un dispositif de traitement des données avec un élément à mémoire qui, en fonction d'un enregistreur de données, affiche et mémorise les résultats de mesure pour une durée susceptible d'être prédéterminée.

17. Dispositif de détection selon la revendication 16, **caractérisé en ce que**, outre le dispositif à antenne, le dispositif de détection comprend une autre sensorique, en particulier au moins un appareil de mesure de l'humidité et/ou au moins un dispositif de détection de température, reliés chacun, quant aux données, également au dispositif de traitement de données.

18. Dispositif de détection selon la revendication 16 ou 17, **caractérisé en ce que**, au moyen du dispositif de détection de données, la puissance d'émission, chaque fois utilisée, des antennes d'émission est susceptible d'être détectée et mémorisée à chaque mesure.

19. Dispositif de détection selon l'une des revendications précédentes, **caractérisé en ce que** le panier de comptage (1) et le dispositif à antenne (4) comprennent chacun une partie fixe et une partie désolidarisable, la partie fixe du panier de comptage (1) étant chaque fois reliée à la partie fixe du dispositif à antenne (4) et la partie désolidarisable du panier de comptage (1) étant reliée à la partie désolidarisable du dispositif à antenne (4).

20. Dispositif de détection selon l'une des revendications précédentes, **caractérisé en ce que** les antennes de réception du dispositif à antenne (4) sont chacune reliées à un amplificateur de réception.

21. Dispositif de détection selon la revendication 20, **caractérisé en ce que** le dispositif de commande (7) central commande l'amplificateur de réception, en fonction du niveau d'entrée des antennes d'émission/de réception.

22. Dispositif de détection selon l'une des revendications précédentes, **caractérisé en ce que** les produits en morceaux (2) à compter, en particulier des balais à franges, sont chacun munis d'au moins une étiquette RFID faisant office de marquage électronique (3), chaque étiquette RFID étant logée de manière imperdable dans une poche de logement fermée du produit en morceaux (2).
